# EUROPEAN PATENT SPECIFICATION

(11) **EP 1 424 008 B1**
(45) Date of publication and mention of the grant of the patent: **16.06.2010**
(21) Application number: 03026975.7
(22) Date of filing: 26.11.2003
(51) Int. Cl.: A21B 1/26, F24C 15/32

(54) **Convection oven with radial flame burner**
Umluftofen mit einem Radialflammenbrenner
Four à convection avec brûleur à flamme radial

(30) Priority: 28.11.2002 IT VI20020260
(43) Date of publication of application: 02.06.2004
(73) Proprietor: IK-INTERKLIMAT SPA, 20153 Milano (IT)
(72) Inventor: Pasquino Daniele, 37035 S. Giovanni Ilarione (VR) (IT)
(74) Representative: Bonini, Ercole

(56) References cited:
- EP-A- 0 344 743
- EP-A- 0 526 768
- EP-A- 1 116 920
- EP-A- 1 176 367
- EP-A- 1 321 720
- EP-A1- 0 245 084
- US-A- 4 648 377
- US-A- 4 867 132
- US-A1- 2002 092 482

## Description

The present invention relates to a convection oven and more particularly, but not necessarily, a steam convection oven to cook confectionery goods and gastronomic specialties.

It is well-known that ovens for cooking food products are generally steam convection ovens wherein inside the cooking chamber a heat exchanger is arranged, comprising a spirally wound tube inside which flue gas generally of a gas-fed burner is flowing with a certain speed.

The burners generally connected to said heat exchanger are generally front flame or torch burners with partial or total premixing of air and fuel.

As to total premixing burners, the air fuel mixture is supplied by mixing means keeping the air-gas ratio substantially independent from the flow rate. When a greater calorific power is desired, it is sufficient to increase the number of revolutions of the ventilation means connected to said mixing means and consequently the flow rate of the burning mixture is increased without changing the air-gas ratio.

One of the most apparent limits of this solution, i.e. of the total premixing burner, is that the flame has a high instability when considerable variations of the required calorific power occur.

The phenomenon of flame separation and also back-fire frequently happens, and this is an extremely dangerous and unwanted situation.

The flame separation is also due to the geometry of the burner head because, since the burner head must face the heat exchanger inlet, the head diameter should be related to and anyway not greater than the diameter of the heat exchanger which is then wound as a coil. However, this jeopardizes the good operation of the burner because the flame in order not to be separated from the head should have a minimum surface area under which instability takes place.

As a matter of fact use of total premixing burners with front flame or the so-called torch type, limits the calorific power that can be supplied to a cooking chamber to relatively low powers in comparison with those demanded by the market, or requires combustion chambers with unacceptable big diameters.

Another inconvenience of the ovens with front flame burner is that the flame striking the first bend of the heat exchanger, frequently causes melting of said bend when the power is increased.

Ovens with radial flame burners are also known, two examples of which are disclosed in the European Patent application no. EP 1 321 720 A and in the European Patent application no. EP 0 344 743 A.

Said ovens, even if they overcome the problem of the melting of the first bend, maintain the inconvenience of the flame anchorage and of the possible back-fire.

The object of the present invention is to overcome the above mentioned limits.

A first object of the invention is to provide an oven for cooking food products, provided with a heat exchanger inside the cooking chamber, having a stable flame even when changing the required calorific power.

Another object of the invention is to avoid that damages to the heat exchanger are generated if the required calorific power is increased.

A further object to be obtained is that the heat exchanger of the oven generates low values of NOX and other harmful emissions, thus producing flue gas with low environmental impact.

All the above mentioned objects and others that will be better pointed out hereinbelow, are attained by a forced convection oven according to the main claim.

According to the invention, the burner head zone where the flame sprouts, consists of fibrous material having a great number of generally radial micro-channels for exit and ignition of the burning mixture. With this radial arrangement of the micro-channels feeding the burning mixture, each flame element has a speed vector with prevailing radial direction. This allows to have a great heat exchange surface and therefore a high heat exchange with the combustion chamber enveloping the burner head.

Further characteristics and features of the invention will be apparent from the description of a preferred embodiment of the invention given as an illustrative, but non-limiting, example and shown in the accompanying sheets of drawings in which:
- Figure 1 is a schematic view of a forced convection oven according to the invention;
- Figure 2 shows a detail of the burner head arranged inside the inlet section of the heat exchanger;
- Figure 3 is a perspective view of a detail of the combustion head; and
- Figures 4 and 5 show constructional variations of the invention with a burner head provided with two different kinds of diffusers of the burning mixture.

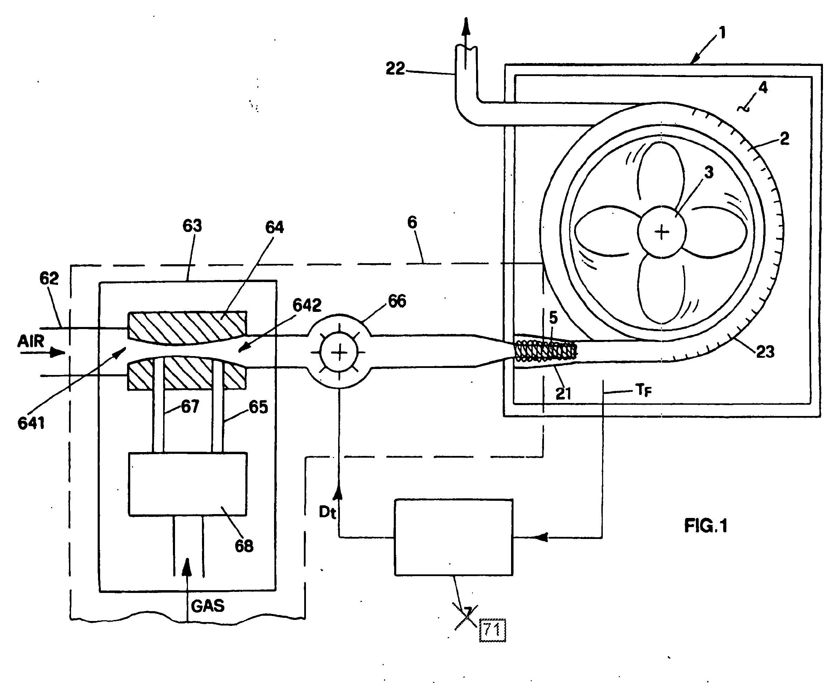

With reference now to the figures of the drawings and more particularly to Figure 1, one can see that the forced convection oven, generally indicated with numeral 1, has inside a heat exchanger indicated with 2, that in this embodiment is spirally wound on the theoretical generatrices of a cylinder thus leaving an internal cylindrical room adapted to install a fan 3 adapted to optimise the heat exchange between said exchanger and the cooking chamber 4 used for cooking food products.

The tube 2 has an inlet straight section 21 having the function of combustion chamber and then a spiral development connected to an end straight section 22.

In the inlet straight section 21 of the exchanger tube 2 the head 5 of a burner generally indicated with numeral 6 is arranged, so that the flue gas generated by the mixture combustion on the burner head, is flowing through the various helices of the exchanger 2 until it goes out from the end section 22 to the outside after having given the heat to the fluid circulating with the aid of fan 3. This fluid is an air-steam mixture with variable proportions according to the cooking or baking kind.

The burner unit 6 has an air inlet tube 62 connected to a mixing valve generally indicated with numeral 63, that as diagrammatically shown in Figure 1, generally comprises a Venturi tube 64 and the actual valve 68.

A duct 65 feeds gas which is then mixed with air coming from inlet 62 and delivered to the inlet 641 of the Venturi tube 64.

The air-gas mixture reaches the fan 66 which then generates the air-gas flow rate coming to the burner head 5 on which the flame is fired.

When the speed of the fan 66 is changed, for instance increasing the number of revolutions, intake of the air-gas mixture coming out from the inlet 642 is increased, so that a vacuum increase inside the Venturi tube 64 is generated, which is felt by the air-filled tube 67 connected with the valve 68.

According to the state of the art said valve 68 when air pressure due to the increase of flow rate generated by the fan 66 is decreased, causes a corresponding greater opening of the gas-feeding valve so that the amount of gas flowing through the tube 65 is increased.

In this way, by increasing or decreasing the number of revolutions of the fan 66, the flow rate of the air-gas mixture is increased or decreased respectively, while the air-gas ratio is kept substantially constant.

A control panel indicated with numeral 71, according to preset oven temperatures, reads the temperature Tf inside the oven and according to the deviation of the temperature reading relative to the preset one, emits a signal ^{δ} T to the fan 66 to change accordingly the number of revolutions.

The above described burner operation is state of the art as disclosed in the Italian patent application VI00A000160 of the same applicant.

As already stated in the introductory part of the description, the burner head must be arranged near the inlet of the heat exchanger 2, so that all the flue gas can flow through said exchanger. Only in this way the heat exchange inside the cooking chamber can be optimised. However, this causes the already mentioned drawbacks that the present invention aims at overcoming.

Indeed, while the prior art discloses a front flame burner, the present invention provides a burner having a combustion head where the flame has a radial development almost along the entire length of the head.

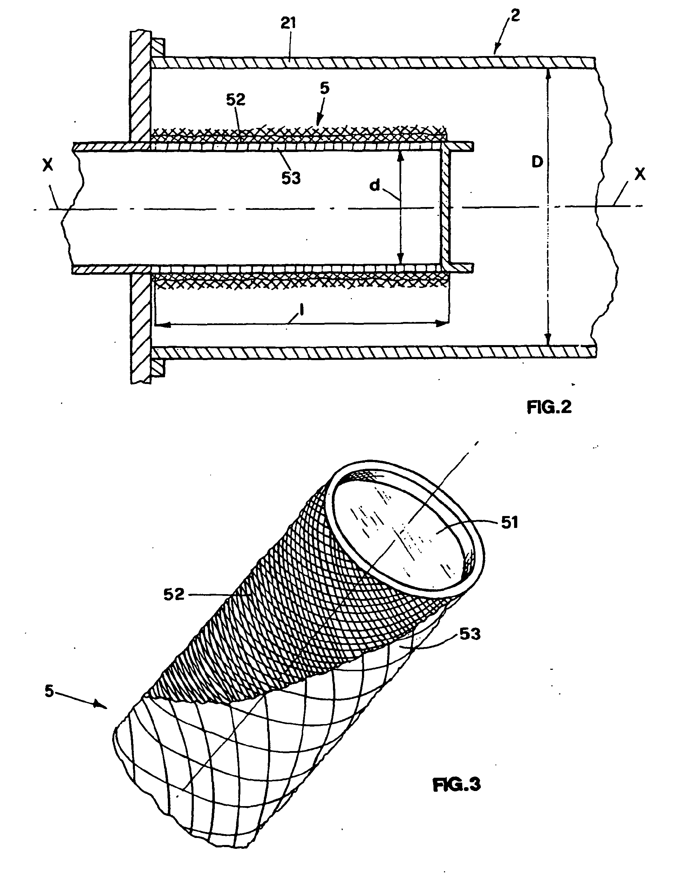

More particularly, the burner according to the invention is a burner wherein the head has essentially a symmetric axial shape and in the illustrated embodiment has, more particularly, a cylindrical shape with a diameter indicated with d of such dimensions that the burner head 5 can be easily inserted inside the first section 21 of the exchanger 2 as shown in Figure 2.

In the embodiment the diameter D of the section 21 of exchanger 2 is almost the double of diameter d of the burner head 5.

The following special provisions were taken to avoid both flame-separation and back-fire in the burner head 5.

First of all, in the burner head 5 an end plug 51 is provided so that the entire mixture is being burnt on the cylindrical surface of the length l and therefore along the radial direction of head 5, and not along the axial direction, i.e. along axis X of said head.

Conducted tests proved that in order to obtain an optimal distribution of the air-gas mixture in the burner head, it is necessary that a proper ratio exists between the length I affected by the flame front and the diameter of the burner head.

More particularly, it was observed that optimal conditions are obtained when the length I of the flame section is greater or equal to the double of the diameter d.

This dimension of the burner head allows the flame to remain anchored to the surface 52 constituting the flame sprouting surface that is made with a special material as described hereinafter.

The fact that the flame sprouting surface is well-rooted in the surface 52 and is not separated therefrom, allows to maximize the effect of heat transmission by radiation on the facing surface 21 of the heat exchanger 2.

A strong radiation due to over-heating of the outer surface of the burner head is then transmitted to the section 21 of the exchanger 2, that is to the combustion chamber and consequently the flue gas, when coming out and being conveyed to the first bend 23 of the spirally wound heat exchanger (see Figure 1), is not so hot to cause the above mentioned harmful effects concerning the front flame burners or non-radiating burners.

In this way the possibility of melting the bend section 23 by over-heating is indeed avoided, because flue gas is coming with a sufficiently lowered temperature because a great portion of heat was already exchanged by radiation in the section 21 of the exchanger.

In this connection it is pointed out that the diameter of the combustion chamber cannot be designed of any size just to avoid big obstruction zones to the air circulated by the fan 3, causing a poor cooking evenness of the food products and an excessive increase of temperature of the material of the combustion chamber.

As to the flame sprouting surface which in this embodiment is a generally cylindrical surface with radial development, this is obtained by inserting a fabric braiding of metal fibre such as Acotech®, on a support core that in this embodiment comprises a metal lathing forming a tubular mesh.

The effect of the mesh braided metal fibre is to generate a great number of micro-channels with generally radial development, through which the air-gas mixture is coming out. In this way each flame element has a generally radial development because the speed vector to be associated to the direction of diffusion of each flame element has a radial direction.

Indeed, the metal fibre surface constitutes also the flame sprouting surface and it is known that the flame anchorage to said surface depends on the dimensional ratio between length and diameter of the micro-channel.

It is pointed out that even the back-fire, which is a phenomenon to be prevented for burner safety and malfunctioning reasons, is avoided just in view of the nature of the micro-channel fabric thus preventing said back-fire.

In order to make operatively a head according to the invention, one starts from a cylindrical or almost cylindrical core, made with metal lathing forming a tubular mesh 53. A plug 51 is then end-welded to said lathing. The metal fibre 52 is subsequently inserted, for instance consisting of the metal fibre Acotech®, fixing it with some welding spots on the core 53 so as to obtain anchorage between metal fibre and core.

Use of the metal fibre relates to an embodiment of the invention only, but equivalent results may be obtained if the metal fibre is replaced by another material such as ceramics. In this case ceramics should also be fibrous or any way have micro-channels allowing the flame to sprout on its surface. Indeed, such a material is required to warrant first of all an optimal behaviour at high temperature, having micro-channels, adapted to make a generally cylindrical surface forming the burner head and having the feature of radially arranged micro-channels and micro-holes so as to obtain a flame distribution generally in the same way as above described.

In order to improve the distribution of the air-gas mixture on the entire burner head, more particularly along its longitudinal dimension making it as much uniform as possible, a constructional variation of the invention provides for application of a diffuser of the combusting mixture inside the burner head.

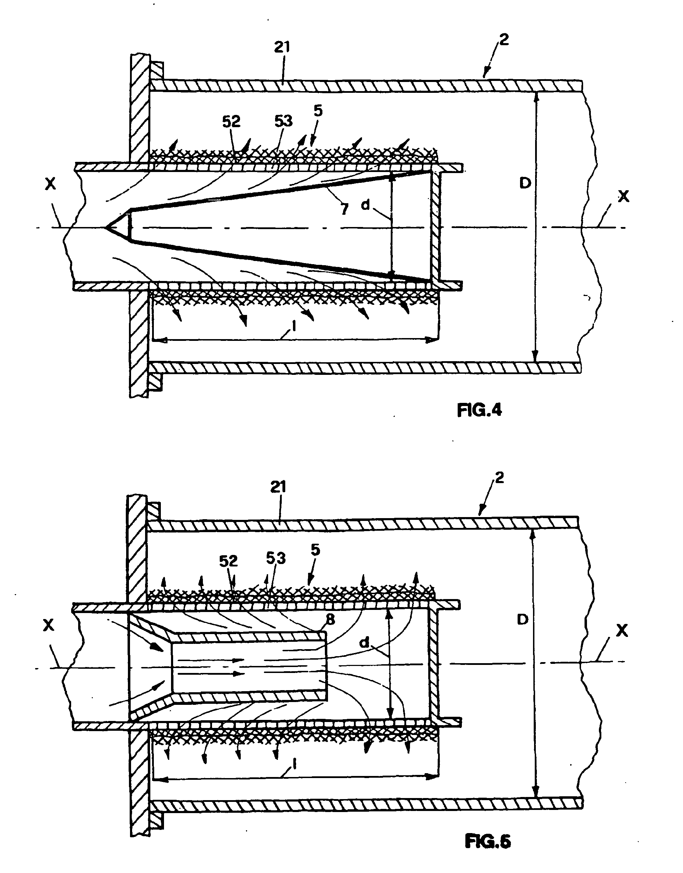

A suitable kind of said diffuser is shown in Figure 4 and indicated with numeral 7.

A further possible kind of diffuser now indicated with numeral 8, is shown in Figure 5.

In any case, said diffuser may take any suitable shape.

## Claims

1. A forced convection oven (1) for cooking food products comprising:
- a cooking chamber (4) having inside heat exchanging means (2) comprising at least a wound tube through which flue gas of burnt gases is flowing;
- a burner (6) provided with air/fuel mixing means (64);
ventilation means (66) adapted to supply the required flow-rate of air/fuel mixture to the burner according a required calorific power,
said burner (6) having a head (5) of a generally axially symmetric shape with its flame front surface mainly distributed along the axial direction of said head, said head having a length greater than its transversal dimension, the speed vector of said flame developing mainly along radial directions, **characterized in that** said burner head is arranged in the inlet straight section of said tube, and **in that** it has its flame sprouting surface made of a material provided with a number of radial micro-channel outlets.

2. The oven according to claim 1) **characterized in that** the ratio between diameter and length of said burner head affected by the flame is equal or less than 1:2.

3. The oven according to claim 1 **characterized in that** said flame sprouting surface is supported by a generally cylindrical core (53).

4. The oven according to claim 3 **characterized in that** said cylindrical core (53) is a metal lathing forming a tubular mesh.

5. The oven according to any of the preceding claims **characterized in that** the end of said burner head is closed by a plug (51).

6. The oven according to claim 5 **characterized in that** said plug (51) is fixedly fastened to said core (53).

7. The oven according to claim 1 **characterized in that** said material of said burner head consists of mesh braided metal fibres forming a plurality of said micro-channels.

8. The oven according to claim 1 **characterized in that** said material of said burner head is a fibrous ceramic material or other material adapted to form a plurality of micro-channels.

9. The oven according to any of the preceding claims, **characterized in that** said burner head (5) is inside provided with a diffuser (7, 8) of burning mixture, adapted to distribute said mixture in a substantially uniform way along the length (I) of said head.

## Patentansprüche

1. Ein Zwangskonvektionsofen (1) zum Garen von Nahrungsmittelprodukten, Folgendes umfassend:
- eine Garkammer (4) mit internen Wärmetauschermitteln (2), die wenigstens ein gewundenes Rohr umfassen, durch das der Fluss der verbrannten Gase strömt;
- einen Brenner (6) mit Mitteln (64) zur Vermischung von Luft und Brennstoff;
- Belüftungsmittel (66), die geeignet sind, den gemäß einer geforderten Wärmeleistung für den Brenner erforderlichen Durchfluss des Luft-/Brennstoffgemischs zu liefern,
wobei der besagte Brenner (6) einen Kopf (5) von im Wesentlichen axial symmetrischer Form aufweist und seine Flammenfrontfläche hauptsächlich in axialer Richtung des Kopfs angeordnet ist, und wobei der Kopf eine größere Länge aufweist als sein Quermaß, und der Geschwindigkeitsvektor besagter Flamme im Wesentlichen in radiale Richtungen verläuft, **dadurch gekennzeichnet, dass** der besagte Brennerkopf innerhalb des geraden Einlassbereichs des besagten Rohrs angeordnet ist, sowie dadurch, dass seine Flammenentwicklungsfläche aus einem Material mit einer Reihe radial verlaufender Mikrokanalauslässe besteht.

2. Ofen gemäß Patentanspruch 1), **dadurch gekennzeichnet, dass** das Verhältnis zwischen Durchmesser und Länge des besagten Brennerkopfs, der durch die Flamme erfasst wird, gleich oder kleiner als 1:2 ist.

3. Ofen gemäß Patentanspruch 1), **dadurch gekennzeichnet, dass** die besagte Flammenentwicklungsfläche durch einen im Wesentlichen zylindrischen Kern (53) gehalten wird.

4. Ofen gemäß Patentanspruch 3), **dadurch gekennzeichnet, dass** der besagte zylindrische Kern (53) ein Streckmetall ist, das ein röhrenförmiges Netz bildet.

5. Ofen gemäß eines jeglichen der vorstehenden Patentansprüche, **dadurch gekennzeichnet, dass** das Ende des besagten Brennerkopfs durch einen Stopfen (51) verschlossen ist.

6. Ofen gemäß Patentanspruch 5), **dadurch gekennzeichnet, dass** der besagte Stopfen (51) fest am besagten Kern (53) befestigt ist.

7. Ofen gemäß Patentanspruch 1), **dadurch gekennzeichnet, dass** das besagte Material des besagten Brennerkopfs aus maschenartig miteinander verflochtenen Metallfasern besteht, die eine Vielzahl der besagten Mikrokanäle bilden.

8. Ofen gemäß Patentanspruch 1) **dadurch gekennzeichnet, dass** das besagte Material des besagten Brennerkopfs ein Keramikfasermaterial oder ein anderes Material ist, das geeignet ist, eine Vielzahl von Mikrokanälen zu bilden.

9. Ofen gemäß eines jeglichen der vorstehenden Patentansprüche, **dadurch gekennzeichnet, dass** der besagte Brennerkopf (5) innen mit einem Brennstoffgemisch-Diffusor (7, 8) versehen ist, der geeignet ist, dieses Gemisch im Wesentlichen gleichmäßig über die Länge (I) des besagten Kopfes zu verteilen.

## Revendications

1. Étuve à convection forcée (1) pour la cuisson de produits alimentaires comprenant:
- une chambre de cuisson (4) présentant dans son intérieur des moyens d'échange de chaleur (2) comprenant au moins un tuyau enroulé à travers lequel des fumées d'évacuation des gaz brûlés passent;
- un brûleur (6) doté de moyens de mélange air-combustible (64);
- des moyens de ventilation (66) aptes à fournir le débit nécessaire d'air-combustible au brûleur selon une puissance calorifique requise,
ledit brûleur (6) ayant une tête (5) de forme essentiellement axiale symétrique avec sa surface du front de flamme distribuée principalement le long de la direction axiale de ladite tête, ladite tête ayant une longueur plus grande que sa dimension transversale, le vecteur de vitesse de ladite flamme se développant principalement le long des directions axiales, **caractérisée en ce que** ladite tête est logée dans la section droite d'entrée dudit tuyau, **et en ce qu**'elle présente sa surface d'accroissement de la flamme réalisée en un matériel doté d'une série de microcanaux radiaux de sortie.

2. Étuve selon la revendication 1), **caractérisée en ce que** le rapport entre le diamètre et la longueur de ladite tête de brûleur concernée par la flamme est égale ou inférieure à 1 : 2.

3. Étuve selon la revendication 1), **caractérisée en ce que** ladite surface d'accroissement de la flamme est supportée par un noyau généralement cylindrique (53).

4. Étuve selon la revendication 3), **caractérisée en ce que** ledit noyau cylindrique (53) est une tôle étirée formée par un réseau tubulaire.

5. Étuve selon l'une quelconque des revendications précédentes, **caractérisée en ce que** l'extrémité de ladite tête de brûleur est fermée par un bouchon (51).

6. Étuve selon la revendication 5), **caractérisée en ce que** ledit bouchon (51) est accouplé de manière fixe audit noyau (53).

7. Étuve selon la revendication 1), **caractérisée en ce que** ledit matériel de ladite tête de brûleur se compose de fibres métalliques entrelacées formant une pluralité desdits microcanaux.

8. Étuve selon la revendication 1), **caractérisée en ce que** ledit matériel de ladite tête de brûleur est un matériel céramique fibreux ou un autre matériel indiqué pour former une pluralité de microcanaux.

9. Étuve selon l'une quelconque des revendications précédentes, **caractérisée en ce que** ladite tête de brûleur (5) présente dans son intérieur un diffuseur (7, 8) de mélange de combustible apte à distribuer ledit mélange de manière essentiellement uniforme selon la longueur (I) de ladite tête.
